# EUROPEAN PATENT APPLICATION

(11) **EP 1 586 761 A2**
(43) Date of publication of application: **19.10.2005**
(21) Application number: 05252259.6
(22) Date of filing: 11.04.2005
(51) Int. Cl.: F02D 45/00, F02D 13/02, F01L 1/34, F01L 13/00

(54) **Valve actuation controlling apparatus and method for engine**

(30) Priority: 15.04.2004 JP 2004120486
(71) Applicant: Toyota Jidosha Kabushiki Kaisha, Toyota-shi, Aichi-ken 471-8571 (JP)
(72) Inventor: Hashizume, Akira, Toyota-shi Aichi-ken 471-8571 (JP)
(74) Representative: Smith, Samuel Leonard

(57) **Abstract**

After commanding an engine to stop, an electronic controller controls a variable working-angle control mechanism to increase the working angle of an intake valve in preparation for restarting of the engine. In the case of an automatic stop, which is followed by restarting of the engine in a relatively short time, the working angle of the intake valve is set to the maximum working angle of the variable working-angle control mechanism, which maximizing decompression. In a manual stop, it is necessary to allow for both hot start and cold start. Also, in the manual stop, a target working angle when the engine is stopped is set less than that of a case of the automatic stop. Thus, the starting characteristic is prevented from being degraded by increased friction of engine parts during a cold start, and knocking is prevented from occurring due to a high compression ratio in a cylinder during a hot start.

## Description

### BACKGROUND OF THE INVENTION

The present invention relates to a valve actuation controlling apparatus and method applied to an engine equipped with a variable working-angle control mechanism which varies the working angle of intake valves.

Engines such as vehicle engines are equipped with variable valve mechanisms which vary valve characteristics of intake valves and exhaust valves. Among variable valve mechanisms proposed recently, there are variable valve lift and working-angle control mechanisms which vary valve lifts and working angles of intake and exhaust valves.

Japanese Laid-Open Patent Publications No. 2002-89303 and No. 2002-61522 each disclose a valve actuation controlling apparatus that presets the valve actuation of intake valves to be suitable for securing engine starting characteristics immediately before the engine stops, thereby preparing for a next engine start. As shown in Fig.8, immediately before the engine stops, that is after commanding the engine to stop, the valve actuation controlling apparatus as disclosed in Japanese Laid-Open Patent Publications No. 2002-89303 and No. 2002-61522 reduces the valve lift and the working angle θ of the intake valves compared to those during idling of the engine, and advances the center ϕ of the working angle. If the working angle θ is reduced and the working angle center ϕ is advanced, intake valve closing time IVC is advanced far ahead of a bottom dead center BDC and a compression ratio of air in a cylinder is reduced, causing decompression to occur during starting of the engine. Also, if the lift is reduced and valve-opening area of the intake valve when opened is reduced, velocity of air flow into the cylinder is increased, thereby intensifying air flow in the cylinder during starting of the engine.

It is true that decompression and intensified cylinder air flow are favorable to improvement of engine starting characteristics. However, the above setting of the valve actuation of intake valves does not always ensure proper engine starting characteristics depending on engine starting conditions.

For example, during a very cold start in which engine parts encounter high friction, working angle θ that is less than that of idling may result in a shortage of intake air, making it impossible to generate sufficient torque to counteract the increased friction. On the other hand, an attempt to intensify air flow in the cylinder will cause heat from friction between air and the intake valve, etc. to raise compression end temperature (temperature at the top dead center) of the air drawn into the cylinder, increasing the likelihood of knocking during a hot start. Thus, reducing the lift and working angle θ of the intake valves immediately before the engine stops do not always ensure proper engine starting characteristics.

### SUMMARY OF THE INVENTION

Accordingly, it is an objective of the present invention to provide valve actuation controlling apparatus and method that improve engine starting characteristics.

To achieve the foregoing and other objectives and in accordance with the purpose of the present invention, a valve actuation controlling apparatus applied to an engine equipped with a variable working-angle control mechanism which varies working angle of an intake valve is provided. After commanding the engine to stop, the valve actuation controlling apparatus controls the variable working-angle control mechanism to increase the working angle of the intake valve in preparation for restarting of the engine.

The present invention provides anther valve actuation controlling apparatus applied to an engine equipped with a variable working-angle control mechanism which varies working angle of an intake valve. After commanding the engine to stop, the valve actuation controlling apparatus controls the variable working-angle control mechanism to increase the working angle of the intake valve in preparation for restarting of the engine, and varies the increased working angle according to whether a stopping requirement of the engine is satisfied.

The present invention also provides an engine having a variable working-angle control mechanism which varies working angle of an intake valve and a valve actuation controlling apparatus. After commanding the engine to stop, the valve actuation controlling apparatus controls the variable working-angle control mechanism to increase the working angle of the intake valve in preparation for restarting of the engine.

The present invention provides another engine having a variable working-angle control mechanism which varies working angle of an intake valve and a valve actuation controlling apparatus. After commanding the engine to stop, the valve actuation controlling apparatus controls the variable working-angle control mechanism to increase the working angle of the intake valve in preparation for restarting of the engine, and varies the increased working angle according to whether a stopping requirement of the engine is satisfied.

Further, the present invention provides a valve actuation controlling method applied to an engine equipped with a variable working-angle control mechanism which varies working angle of an intake valve. The method includes controlling the variable working-angle control mechanism to increase the working angle of the intake valve in preparation for restarting of the engine, after commanding the engine to stop.

The present invention provides another valve actuation controlling method applied to an engine equipped with a variable working-angle control mechanism which varies working angle of an intake valve. The method includes: controlling the variable working-angle control mechanism to increase the working angle of the intake valve in preparation for restarting of the engine, after commanding the engine to stop; and varying the increased working angle according to whether a stopping requirement of the engine is satisfied.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a schematic diagram showing an engine control system according to one embodiment of the present invention;
Fig. 2(a) is a graph showing changes in valve actuation in a variable phase mechanism;
Fig. 2(b) is a graph showing changes in valve actuation in a variable working-angle control mechanism;
Fig. 3 is a diagram outlining automatic stop/restart control;
Fig. 4 is a flowchart of a working angle setting process during engine stopping period;
Fig. 5(a) is a diagram showing a setting of working angle of the intake valve after a manual engine stop made by the automatic stop/restart control;
Fig. 5(b) is a diagram showing a setting of the working angle of the intake valve after an automatic engine stop made by the automatic stop/restart control;
Fig. 6 is a time chart showing a control in a case where the ignition switch is turned off;
Fig. 7 is a time chart showing a control in a case where the engine is automatically stopped; and
Fig. 8 is a diagram showing valve actuation setting of an intake valve when an engine stops in a case of a prior art valve actuation controlling apparatus.

### DETAILED DESCRIPTION OF THE PREFERRED EMBODIMENTS

An embodiment of the present invention will be described in detail below with reference to the drawings.

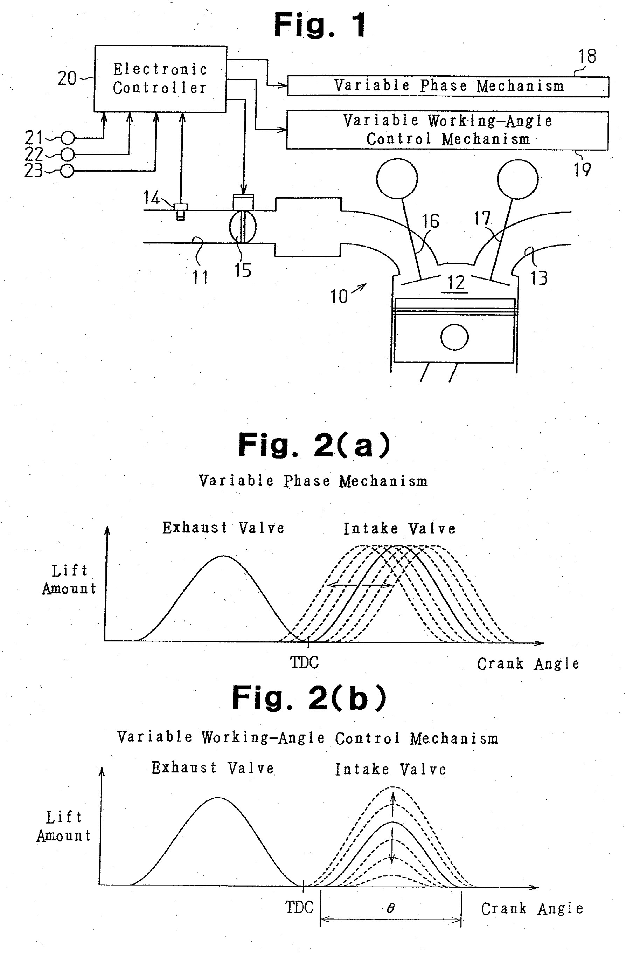

As shown in Fig. 1, an engine 10 includes an intake passage 11, a combustion chamber 12, and an exhaust passage 13. Installed in the intake passage 11 are an air flowmeter 14 which detects an air flow rate in the intake passage 11 and a throttle valve 15 which changes the air flow rate by changing the flow area of the intake passage 11. The intake passage 11 is connected to the combustion chamber 12 via an intake valve 16. The combustion chamber 12 is connected to the exhaust passage 13 via an exhaust valve 17. The intake valve 16 and exhaust valve 17 are driven according to rotation of the engine 10. The intake valve 16 opens and closes the intake passage 11 to the combustion chamber 12, and the exhaust valve 17 opens and closes the exhaust passage 13 to the combustion chamber 12.

A valve operating system of the intake valve 16 has a variable phase mechanism 18 and a variable working-angle control mechanism 19. The variable phase mechanism 18 continuously changes a working angle center ϕ of the intake valve 16 as shown in Fig. 2(a). The variable phase mechanism 18 employed in this engine 10 changes the working angle center ϕ by changing a rotational phase of a camshaft with respect to a crankshaft. The variable working-angle control mechanism 19 continuously changes the working angle θ of the intake valve 16 as shown in Fig. 2(b). The variable working-angle control mechanism 19 increases the lift of the intake valve 16 in accordance with an increase of the working angle θ, and decreases the lift of the intake valve 16 in accordance with a decrease of the working angle θ. The working angle of the intake valve 16 is the number of degrees the intake valve 16 stays open.

Both of the variable phase mechanism 18 and the variable working-angle control mechanism 19 are driven hydraulically. The hydraulic power is supplied from an oil pump that is driven by rotation of the crankshaft of the engine 10.

Various types of control over the engine 10 configured as described above are performed by an electronic controller 20. The electronic controller 20 is equipped with a central processing unit (CPU) which runs various computational processes for controlling the engine 10, a read-only memory (ROM) which stores control programs and data, a random access memory which records computational results from the CPU and data from sensors, and input and output ports used to exchange data with external devices.

The input ports of the electronic controller 20 are connected with the air flowmeter 14, a throttle sensor 21, a valve timing sensor 22 (VT sensor 22), and a valve lift sensor (VL sensor 23). The throttle sensor 21 detects the opening degree (throttle opening degree Ta) of the throttle valve 15. The VT sensor 22 detects the current working angle center ϕ of the intake valve 16. The VL sensor 23 detects the current working angle θ of the intake valve 16. The input ports of the electronic controller 20 are connected with various sensors which detect operating condition of the engine 10 and driving condition of the vehicle.

The output ports of the electronic controller 20 are connected with various actuators used to control the engine 10 as well as with the throttle valve 15, the variable phase mechanism 18, and the variable working-angle control mechanism 19. The electronic controller 20 controls the actuators based on detection results produced by the various sensors, and thereby performs various types of control over the engine 10.

For example, valve actuation control of the intake valve 16 is performed as follows. First, the electronic controller 20 calculates target values for the working angle center ϕ and the working angle θ of the intake valve 16 suitable for the current operating state based on the rotational speed of the engine and depression of an accelerator pedal detected by sensors. The electronic controller 20 performs feedback control of the variable phase mechanism 18 and the variable working-angle control mechanism 19 such that the current working angle center ϕ and working angle θ detected by the VT sensor 22 and the VL sensor 23 of the intake valve 16 seek the calculated respective target values. This makes it possible to obtain optimum valve actuation of the intake valve 16 according to the current operating state of the engine.

If the working angle θ and the lift of the intake valve 16 are changed by the variable working-angle control mechanism 19, the volume of air introduced into the combustion chamber 12 (intake air amount Ga) is changed as well. To deal with this situation, the electronic controller 20 controls the opening degree of the throttle valve 15 along with control of the working angle θ. This secures a required intake air amount Ga regardless of changes made by the variable working-angle control mechanism 19 to the working angle θ and the lift of the intake valve 16.

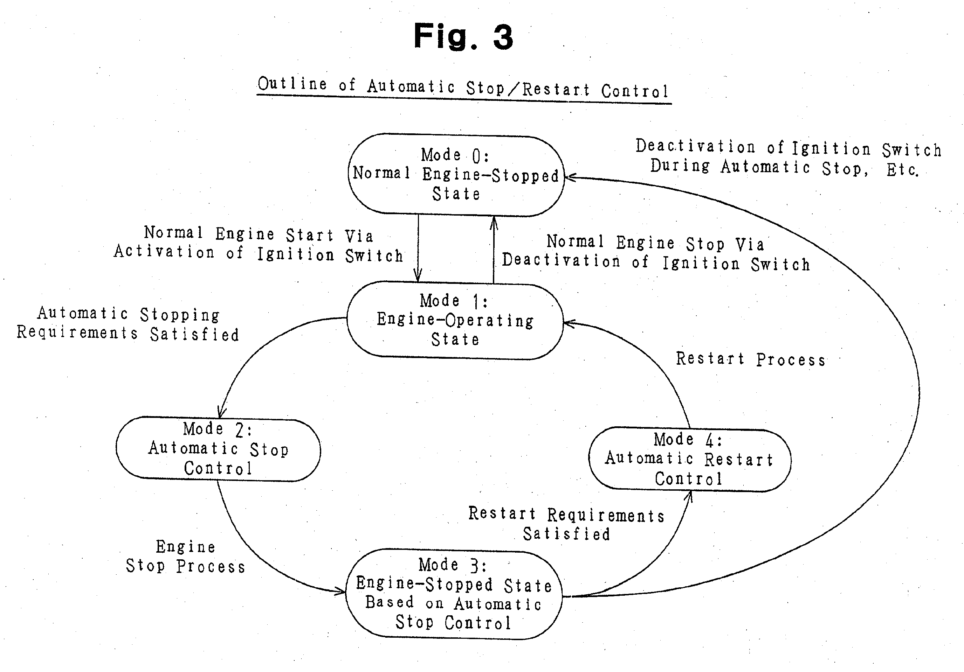

If idling continues for a relatively long period of time while waiting for traffic lights to change, automatic stop/restart control, i.e., "automatic idling stop control", is performed, which involves stopping the engine 10 automatically, waiting in a stopped state, and restarting the engine in response to the driver's action to start the vehicle. The automatic stop/restart control is performed by the electronic controller 20, and will be outlined below with reference to Fig. 3.

When the driver turns on an ignition switch, so that the electronic controller 20 is activated, the electronic controller 20 sets control mode to Mode 0, which represents normal engine-stopped state. In Mode 0, if the driver sets the ignition switch to a Start position, the engine 10 starts being cranked. When the engine 10 is started successfully, the control mode of the electronic controller 20 shifts to Mode 1, which represents normal engine-operating state.

If the ignition switch is turned off during normal operation of the engine 10 in Mode 1, the electronic controller 20 performs a normal engine stopping process to stop the engine 10 and shifts to Mode 0. After performing necessary stop processes, the electronic controller 20 cuts off power to itself.

On the other hand, if automatic stopping requirements of the engine 10 are satisfied during normal engine operation in Mode 1, the electronic controller 20 shifts to Mode 2 in which it performs an engine stop process to stop the engine 10 automatically. With the engine 10 of this embodiment, the automatic stopping requirements are satisfied, for example, if all the following conditions (a1) to (a6) are met.
(a1) The depression of the accelerator pedal is 0.
(a2) The vehicle speed is equal to or lower than a predetermined speed.
(a3) The brake pedal is depressed.
(a4) Coolant temperature is equal to or higher than a predetermined temperature Ta and the engine 10 has been warmed up.
(a5) Hydraulic fluid temperature of an automatic transmission is equal to or higher than a predetermined temperature.
(a6) Car battery level is equal to or above a predetermined value.

As the control mode shifts to Mode 2, the electronic controller 20 stops fuel supply, and thereby stops the engine 10. When it is confirmed that the engine 10 has stopped completely, the control mode of the electronic controller 20 shifts to Mode 3, which represents engine-stopped state brought about by the automatic stop/restart control.

In Mode 3, when the engine 10 is on standby and in a stopped state, if restart requirements of the engine 10 are satisfied, the electronic controller 20 shifts to Mode 4 in which it performs a restart process to restart the engine 10 automatically. With the engine 10 of this embodiment, the restart requirements are satisfied, for example, if any of the following conditions (b1) to (b4) is met.
(b1) The brake pedal is released.
(b2) The accelerator pedal is depressed.
(b3) A shift is made from P (parking) or N (neutral) range to another range.
(b4) The car battery level is below a predetermined value.
   As the control mode shifts to Mode 4, the engine 10 is restarted. When the engine 10 is restarted successfully, the control mode of the electronic controller 20 shifts to Mode 1.
   In Mode 3, i.e., in an engine-stopped state brought about by the automatic stop/restart control, if a malfunction occurs during restarting of the engine 10 in Mode 4 due to turning off of the ignition switch or an abnormality in the system, the electronic controller 20 shifts forcibly to Mode 0. In that case, the engine 10 is restarted only if the driver operates the ignition switch directly. That is, the engine 10 is not restarted automatically.

### (Engine Stop Time Working Angle Setting Process)

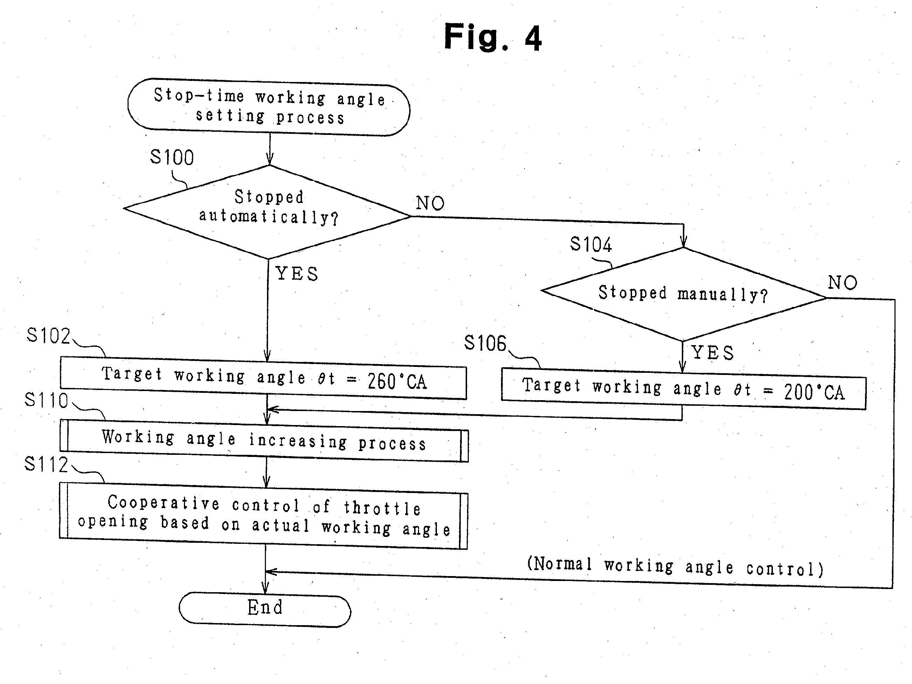

With the engine 10 of this embodiment, when the engine 10 stops, the working angle θ of the intake valve 16 is set to an optimum value in preparation for the next restarting of the engine 10. Details of the stop-time working angle setting process will be described below with reference to Figs. 4 to 7.

The engine 10 of this embodiment can be stopped in two ways: manual stop via deactivation of the ignition switch and automatic stop via the automatic stop/restart control. In the case of the automatic stop, which is followed by restarting in a relatively short time, the restarting is a hot start in which the engine 10 is restarted in a sufficiently hot state. On the other hand, in the case of the manual stop, which is made through deactivation of the ignition switch, it is necessary to allow for both hot start and cold start because it is difficult to predict situations in which the engine is started.

Thus, according to this embodiment, the working angle θ of the intake valve 16 is varied between the automatic stop based on automatic stop/restart control and manual stop based on deactivation of the ignition switch. Thus, an optimum working angle θ is preset for the intake valve 16 according to expected situations in which the engine 10 will be started, taking into consideration the difference between automatic stop and manual stop.

Fig. 4 shows a flowchart of the stop-time working angle setting process according to this embodiment. The electronic controller 20 determines in Step 100 whether the engine 10 is in an automatically stopped state. If the engine 10 is in an automatically stopped state (S100: YES), the electronic controller 20 sets the target value of the working angle θ of the intake valve 16, i.e., a stop-time target working angle. θt which is set during a stop, to a maximum working angle θmax (θmax = 260° CA in this engine 10) which is the upper limit of a working angle range of the variable working-angle control mechanism 19 in step 102. Thereafter, the electronic controller 20 proceeds to step 110. If the engine 10 is not in an automatically stopped state (S100: NO), the electronic controller 20 goes to step 104.

At step 104, the electronic controller 20 determines whether the engine 10 is currently in a manually stopped state based on deactivation of the ignition switch. If the engine 10 is in a manually stopped state (S104: YES), the electronic controller 20 sets the stop-time target working angle θt to a relatively large value (e.g., 200° CA) in step 106, and then it goes to step 110. If the engine 10 is not in a manually stopped state (S104: NO), i.e., if the engine 10 is not currently stopped, the electronic controller 20 temporarily suspends the routine. In this case, normal working angle control is performed according to the engine-operating state as described above.

In step 110, the electronic controller 20 controls the variable working-angle control mechanism 19 such that the current working angle θ of the intake valve 16 seeks the target working angle θt set in step 102 or step 106. Immediately before a stop, the engine 10 is normally operated under low loads and the working angle θ of the intake valve 16 is set to a relatively small value. Thus, the working angle θ of the intake valve 16 is increased through the working angle control. At the same time, the electronic controller 20 also changes the working angle center ϕ of the intake valve 16 as required.

If the working angle θ of the intake valve 16 is increased, the intake air amount Ga changes accordingly. This increases or decreases compression torque of the air in the cylinder, and may cause variations in rotational speed of the engine. To deal with this situation, the electronic controller 20 performs cooperative control in step 112 to regulate the throttle opening Ta in response to increases in the working angle θ of the intake valve 16, and then the electronic controller 20 temporarily suspends the routine.
The cooperative control involves decreasing the throttle opening Ta to curb any increase in the intake air amount Ga resulting from increases in the working angle θ of the intake valve 16, and increasing the throttle opening Ta to check any decrease in the intake air amount Ga resulting from increases in the working angle θ of the intake valve 16.

Even if the intake air amount Ga is not kept constant by the cooperative control of the throttle opening Ta while the engine is stopped, it is possible to reduce variations in the rotational speed of the engine, provided that the changes in the intake air amount Ga resulting from increases in the working angle θ is curbed through changes in the throttle opening Ta. The electronic controller 20 executes the above routine periodically while it is active.

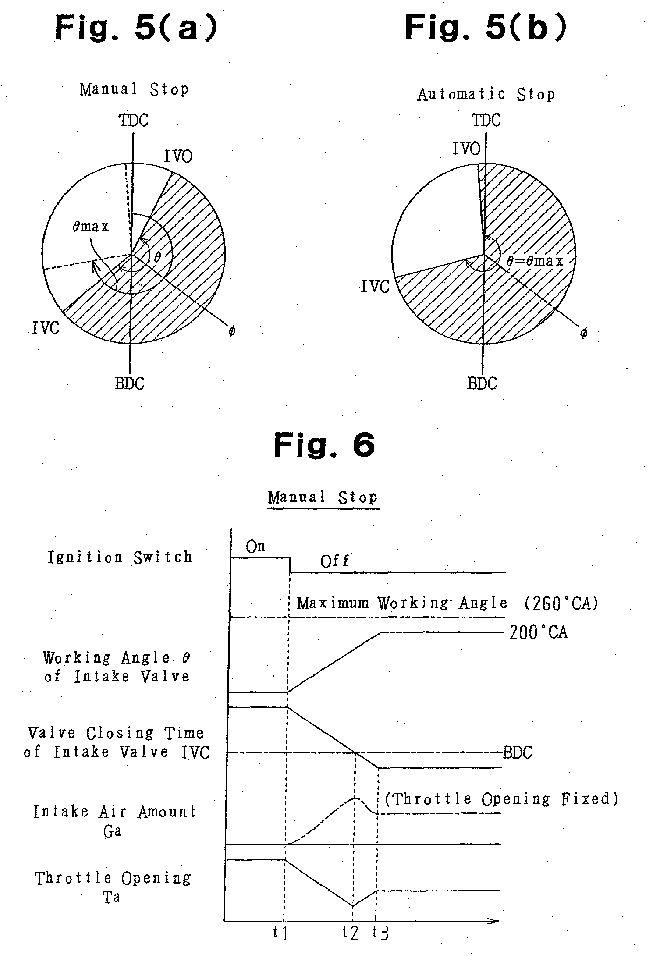

After a manual stop, the working angle θ of the intake valve 16 is set to a relatively large value (e.g., 200° CA) by the stop-time working angle setting process. In so doing, the valve closing time IVC of the intake valve 16 is set to a point relatively early in the middle period of the compression stroke as shown in Fig. 5(a). Since both hot start and cold start are anticipated in the case of restarting after a manual stop as described above, it is necessary to set working angle θ which can accommodate both hot start and cold start properly.

In the case of a hot start, an excessive volume of the intake air amount Ga raises the compression end temperature, i.e., an excessive volume of the intake air amount Ga increases a temperature rise in the cylinder due to adiabatic compression in the cylinder when the top dead center is reached. This may cause knocking. To deal with this situation, it is necessary to lower the compression ratio of air in the cylinder by delaying the valve closing time IVC of the intake valve 16 relative to the bottom dead center BDC and thereby returning part of the air drawn once into the cylinder to the intake passage 11 along with ascent of the piston during the compression stroke.

In the case of a cold start, it is necessary to secure an intake air amount Ga equal to or larger than a certain volume in order to generate sufficient torque to counteract the friction of parts of the engine 10 increased by decreased lubricant viscosity and the like. That is, even when reducing the compression ratio of air in the cylinder, the delay in the valve closing time IVC of the intake valve 16 caused by an increase in the working angle θ should be kept within certain limits in order to secure the sufficient volume of intake air needed to make a cold start.

Thus, at the time of a manual stop of the engine 10, the target working angle θt of the intake valve 16 is set such that a compression ratio of air in the cylinder (combustion chamber 12) is equal to or lower than the upper limit of a range in which knocking is avoided during a hot start of the engine 10, and is equal to or higher than the lower limit of a range in which sufficient torque is generated during a cold start of the engine 10. Consequently, during restarting, the engine 10 can be started under increased friction in case of a cold start, and knocking can be avoided in case of a hot start. Also, decompression occurs due to the reduced compression ratio.

In order to permit a delay in the valve closing time IVC, the working angle center ϕ of the intake valve 16 is delayed more than during low-load operation of the engine 10 such as idling.

On the other hand, after an automatic stop of the engine 10, the working angle θ of the intake valve 16 is set to the maximum working angle θmax by the stop-time working angle setting process. The valve closing time IVC of the intake valve 16 is set in the middle period of the compression stroke, lagging greatly behind the bottom dead center BDC as shown in Fig. 5(b).

After an automatic stop, since the engine 10 is restarted in a relatively short time, the restarting is expected to be a hot start. Since only a hot start is expected, the engine 10 requires only small torque during starting, obviating the need to secure a large intake air amount Ga. Consequently, the valve closing time IVC of the intake valve 16 is allowed to be delayed greatly in order to maximize decompression. Thus, the working angle θ of the intake valve 16 is set to the maximum working angle θmax, allowing the valve closing time IVC to be delayed to the maximum extent possible. Incidentally, the working angle center ϕ of the intake valve 16 is set to the same phase as during the manual stop.

Fig. 6 shows in a manual stop in the stop-time working angle setting process. As shown in Fig. 6, if the ignition switch is turned off at time t1, i.e., if an engine stop command is given manually, the working angle θ of the intake valve 16 is increased gradually to the target working angle θt (200° CA). At the same time, the valve closing time IVC of the intake valve 16 is gradually delayed toward the bottom dead center BDC.

At this time, if the throttle opening Ta is fixed, increases in the working angle θ result in increases in the intake air amount Ga as indicated by an alternate long and short dash line in Fig. 6. However, since the throttle opening Ta is decreased gradually by the cooperative control with increases in the working angle θ, the increases in the intake air amount Ga are curbed.

When the valve closing time IVC of the intake valve 16 is delayed relative to the bottom dead center BDC at time t2, the intake air amount Ga decreases with further increases in the working angle θ. However, after time t2, the cooperative control gradually increases the throttle opening Ta in accordance with increases in the working angle θ, and thereby curbs the decreases in the intake air amount Ga.

At time t3, when the working angle θ of the intake valve 16 reaches the target working angle θt (e.g., 200° CA), the working angle θ stops increasing and is held at the target working angle θt. When it is confirmed that the working angle θ has stopped increasing to the target working angle θt and that the engine 10 has stopped completely, the electronic controller 20 finishes the engine stop process and cuts off power to itself.

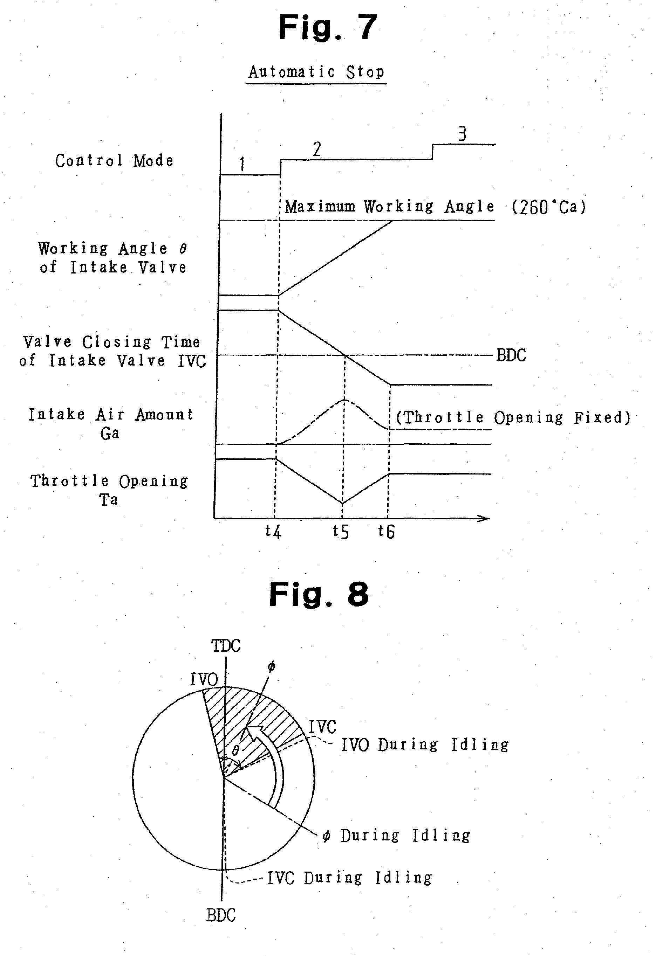

Fig. 7 shows in an automatic stop in the stop-time working angle setting process. As shown in Fig. 7, at time t4, if the automatic stopping requirements are satisfied and the electronic controller 20 shifts from Mode 1 to Mode 2, i.e., if an engine stop command is given by the automatic stop/restart control, the working angle θ of the intake valve 16 increases gradually to the maximum working angle θmax (260° CA), i.e., to the target working angle θt. At the same time, the valve closing time IVC of the intake valve 16 is delayed toward the bottom dead center BDC, and the intake air amount Ga is increased accordingly. Thus, the cooperative control gradually decreases the throttle opening Ta to curb the increases in the intake air amount Ga.

When the valve closing time IVC of the intake valve 16 is delayed relative to the bottom dead center BDC at time t5, the intake air amount Ga decreases with further increases in the working angle θ. Thus, the cooperative control gradually increases the throttle opening Ta to curb the decreases in the intake air amount Ga.

At time t6, when the working angle θ of the intake valve 16 reaches the maximum working angle θmax, the working angle θ stops increasing and is held at the maximum working angle θmax. When it is confirmed that the working angle θ has stopped increasing to the target working angle θt and that the engine 10 has stopped completely, the electronic controller 20 switches to Mode 3 and makes the engine 10 standby in a stopped state until the restart requirements are satisfied.

The embodiment described above has the following advantages.
(1) After commanding the engine 10 to stop, the electronic controller 20 according to this embodiment increases the working angle θ of the intake valve 16 far more greatly than for a low-load operation, in preparation for restarting the engine 10. Specifically, the working angle θ of the intake valve 16 is increased to such an extent that the valve closing time IVC of the intake valve 16 coincides with the middle period of the compression stroke. Consequently, the compression ratio of air in the cylinder is reduced, causing decompression to occur. This reduces the torque required for the crankshaft to rotate. The restart of the engine 10 is therefore facilitated. Also, since decompression occurs even if intake air is not throttled by the intake valve 16, it is possible to prevent compression end temperature from rising due to frictional heat and to avoid eventual knocking during a hot start of the engine 10.
(2) According to this embodiment, the target working angle θt for increases in the working angle θ is varied between automatic stop and manual stop of the engine 10. More specifically, in the case of the automatic stop of the engine 10, the target working angle θt is set to the maximum working angle θmax of the variable working-angle control mechanism 19. In the case of the manual stop of the engine 10, the target working angle θt is set such that the compression ratio of air in the cylinder is equal to or lower than the upper limit of a range in which knocking can be avoided during a hot start of the engine, and is equal to or higher than the lower limit of a range in which sufficient torque can be generated during a cold start of the engine. This makes it possible to set a desirable working angle according to conceivable situations in which the engine 10 will be started in the case of both automatic stop and manual stop.
(3) According to this embodiment, cooperative control of the intake valve 16 is performed in response to increases in the working angle θ of the intake valve 16 at the time of an engine stop. This reduces variations in the intake air amount Ga resulting from increases in the working angle θ of the intake valve 16 during the engine stop, making it possible to reduce variations in the rotational speed of the engine 10 caused by changes in the compression ratio.
(4) According to this embodiment, the working angle center ϕ of the intake valve 16 is changed along with increases in the working angle θ of the intake valve 16 at the time of the engine stop. This makes the valve actuation of the intake valve 16 at the time of restarting more suitable for starting the engine 10.

The above embodiments may be modified as follows.

The settings of the target working angle θt in the stop-time working angle setting process at the time of both manual stop and automatic stop may be changed as required according to the characteristics of the given engine. If the target working angle θt of the intake valve 16 at the time of a manual stop is set to such a value which allows for conceivable situations in which the engine will be restarted after both automatic stop and manual stop, it is possible to ensure proper engine starting characteristics.

The working angle center ϕ may be varied between automatic stop and manual stop. This permits the valve actuation of the intake valve 16 at restart of the engine 10 to be finely adjusted. Consequently, the starting characteristics of the engine 10 can be further improved depending on the adjustment.

The target working angle θt at the stop-time working angle setting process of the above embodiments may be varied according to the engine stopping requirements in the automatic stop and manual stop. For example, if outside air temperature is very low when the engine stops, it is expected that the engine 10 is restarted at a very low temperature, and thus the target working angle θt may be set to a smaller value than when temperature is relatively high. In such a case, the present invention is also applicable to engines which do not perform automatic stop/restart control.

It may be after the engine 10 stops completely that the stop-time working angle setting process increases the working angle θ in preparation for restarting. In this case, the cooperative control of the throttle opening Ta performed along with increases in the working angle θ may be omitted. Also, the cooperative control of the throttle opening Ta may also be omitted if variations in the rotational speed of the engine resulting from increases in the working angle θ are small.

The control for increasing the working angle θ when the engine stops can be applied, in the same or similar manner as the above embodiments, to an engine which has only a variable working-angle control mechanism 19, but does not have a variable phase mechanism 18.

The present examples and embodiments are to be considered as illustrative and not restrictive and the invention is not to be limited to the details given herein, but may be modified within the scope and equivalence of the appended claims.

## Claims

1. A valve actuation controlling apparatus for use in an engine equipped with a variable working-angle control mechanism which varies working angle of an intake valve, **characterized in that**, after commanding the engine to stop, the valve actuation controlling apparatus controls the variable working-angle control mechanism to increase the working angle of the intake valve in preparation for restarting of the engine.

2. A-valve actuation controlling apparatus according to claim 1, **characterized in that**, after commanding the engine to stop, the valve actuation controlling apparatus varies the increased working angle according to whether a stopping requirement of the engine is satisfied.

3. The valve actuation controlling apparatus according to claim 2, **characterized in that** the increased working angle is varied within a range where the valve closing time of the intake valve coincides with a middle period of a compression stroke.

4. The valve actuation controlling apparatus according to claim 2 or 3, **characterized in that** the engine includes an ignition switch and performs automatic stop/restart control,
wherein the engine stopping requirement comprises:
an automatic stopping requirement that is satisfied when the engine is stopped by the automatic stop/restart control; and
a manual stopping requirement that is satisfied when the ignition switch has been turned off, and the engine is stopped by the manual stopping requirement is satisfied, accordingly.

5. The valve actuation controlling apparatus according to claim 4, **characterized in that** the increased working angle that has been varied in accordance with the automatic stopping requirement is larger than the increased working angle that has been varied in accordance with the manual stopping requirement.

6. The valve actuation controlling apparatus according to claim 5, **characterized in that** the engine includes a cylinder,
wherein the increased working angle that has been varied in accordance with the automatic stopping requirement is set to a maximum working angle of the variable working-angle control mechanism, and wherein the increased working angle that has been varied in accordance with the manual stopping requirement is equal to or lower than an upper limit of a range in which a compression ratio of air in the cylinder does not cause knocking during a hot start of the engine, and is equal to or higher than a lower limit of a range in which a compression ratio of air in the cylinder permits a torque sufficient for a cold start of the engine to be generated.

7. The valve actuation controlling apparatus according to any one of claims 2 to 6, **characterized in that** the engine further includes a variable phase mechanism that varies a center of the working angle of the intake valve,
wherein, after commanding the engine to stop, the valve actuation controlling apparatus sets, in preparation for restarting of the engine, the working angle center of the intake valve to a phase that is set according to the stopping requirement of the engine.

8. The valve actuation controlling apparatus according to any one of claims 1 to 7, **characterized in that** the apparatus adjusts a throttle opening of the engine in accordance with the increase in the working angle of the intake valve after commanding the engine to stop.

9. An engine having a variable working-angle control mechanism which varies working angle of an intake valve and a valve actuation controlling apparatus according to any preceding claim.

10. ' A valve actuation controlling method applied to an engine equipped with a variable working-angle control mechanism which varies working angle of an intake valve, the method being **characterized by:**
controlling the variable working-angle control mechanism to increase the working angle of the intake valve in preparation for restarting of the engine, after commanding the engine to stop.

11. A valve actuation controlling method according to claim 10, **characterized by:**
varying the increased working angle according to whether a stopping requirement of the engine is satisfied.

12. The valve actuation controlling method according to claim 11, **characterized in that** said varying the increased working angle includes varying the increased working angle within a range where the valve closing time of the intake valve coincides with a middle period of a compression stroke.

13. The valve actuation controlling method according to claim 11 or 12, **characterized in that** the engine includes an ignition switch and performs automatic stop/restart control,
wherein the engine stopping requirement comprises:
an automatic stopping requirement that is satisfied when the engine is stopped by the automatic stop/restart control; and
a manual stopping requirement that is satisfied when the ignition switch has been turned off, and the engine is stopped by the manual stopping requirement is satisfied, accordingly.

14. The valve actuation controlling method according to claim 13, **characterized in that** the increased working angle that has been varied in accordance with the automatic stopping requirement is larger than the increased working angle that has been varied in accordance with the manual stopping requirement.

15. The valve actuation controlling method according to claim 14, **characterized in that** the engine includes a cylinder, and
wherein the increased working angle that has been varied in accordance with the automatic stopping requirement is set to a maximum working angle of the variable working-angle control mechanism, and wherein the increased working angle that has been varied in accordance with the manual stopping requirement is equal to or lower than an upper limit of a range in which a compression ratio of air in the cylinder does not cause knocking during a hot start of the engine, and is equal to or higher than a lower limit of a range in which a compression ratio of air in the cylinder permits a torque sufficient for a cold start of the engine to be generated.

16. The valve actuation controlling method according to any one of claims 11 to 15, **characterized in that** the engine further includes a variable phase mechanism that varies a center of the working angle of the intake valve, the method comprising:
setting, in preparation for restarting of the engine, the working angle center of the intake valve to a phase that is set according to the stopping requirement of the engine after commanding the engine to stop.

17. The valve actuation controlling method according to any one of claims 10 to 16, **characterized by:**
adjusting a throttle opening of the engine in accordance with the increase in the working angle of the intake valve after commanding the engine to stop.
